# EUROPEAN PATENT APPLICATION

(11) **EP 4 398 373 A1**
(43) Date of publication of application: **10.07.2024**
(21) Application number: 22864070.2
(22) Date of filing: 14.07.2022
(51) Int. Cl.: H01M 10/0587, H01M 4/131, H01M 4/36, H01M 4/62, H01M 10/052, H01M 50/107, H01M 50/531, H01M 50/538

(54) **NON-AQUEOUS ELECTROLYTE SECONDARY BATTERY**

(30) Priority: 31.08.2021 JP 2021140955
(71) Applicant: Panasonic Intellectual Property Management Co., Ltd., Osaka-shi, Osaka 540-6207 (JP)
(72) Inventor: KAWAKITA, Akihiro, Kadoma-shi, Osaka 571-0057 (JP); INOUE, Katsuya, Kadoma-shi, Osaka 571-0057 (JP); OGASAWARA, Takeshi, Kadoma-shi, Osaka 571-0057 (JP)
(74) Representative: Novagraaf International SA
(86) International application number: PCT/JP2022/027718
(87) International publication number: WO 2023/032482

(57) **Abstract**

Provided is a non-aqueous electrolyte secondary battery wherein cycle characteristics are improved while improving the battery capacity per unit volume. This positive-electrode active material for a non-aqueous electrolyte secondary battery comprises: an electrode body in which a strip-shaped positive electrode and a strip-shaped negative electrode are wound with a separator interposed therebetween; a bottomed cylindrical exterior body having an outer diameter of 25 mm or more, that houses the electrode body and is connected to the negative electrode; and a sealing body that seals an opening at the upper end of the exterior body and is connected to the positive electrode. The positive electrode includes a positive-electrode current collector, and a positive-electrode mixture layer formed on the surface of the positive-electrode current collector, the positive-electrode mixture layer containing a positive-electrode active material and a phosphorus compound. The positive-electrode active material includes a lithium-containing composite oxide having a layered rock-salt structure. The weight per unit area of the positive-electrode mixture layer is 250 g/m² or more. In the electrode body, three or more positive-electrode leads are led out.

## Description

### TECHNICAL FILED

The present disclosure generally relates to a non-aqueous electrolyte secondary battery.

### BACKGROUND ART

In recent years, non-aqueous electrolyte secondary batteries that comprise a positive electrode, a negative electrode, and a non-aqueous electrolyte, and that move Li ions and the like between the positive electrode and the negative electrode to perform charge and discharge have been commonly used as secondary batteries with high output and high capacity. Patent Literature 1 discloses a secondary battery that attempts to improve output characteristics of the battery and that reduces a cost of current collecting members by providing the current collecting members on upper and lower sides of an electrode assembly having a plurality of protruded tabs. Patent Literature 1 describes a lithium-containing composite oxide including two or more elements selected from the group consisting of Co, Ni, and Mn, as a positive electrode active material.

A positive electrode active material included in a secondary battery may cause side reactions with an electrolyte to decrease a battery capacity with repeated charge and discharge. Patent Literature 2 discloses a surface-modified lithium-containing composite oxide wherein zirconium hydroxide or zirconium oxide, and at least one lithium salt selected from the group consisting of Li₂ZrF₆, Li₂TiF₆, Li₃PO₄, Li₂SO₄, and Li₂SO₄·H₂O are attached on a surface of a lithium-containing composite oxide for purposes of improvement of charge-discharge cycle characteristics and the like.

### CITATION LIST

### PATENT LITERATURE

PATENT LITERATURE 1: Japanese Patent No. 5747082
PATENT LITERATURE 2: International Publication No. 2014/104234

### SUMMARY

### TECHNICAL PROBLEM

In recent years, increase in size of a battery has been investigated for a purpose of increasing a battery capacity per unit volume. The present inventors have made intensive investigation, and consequently found that a large battery fails to improve cycle characteristics with increasing the battery capacity per unit volume even when the art described in Patent Literature 1 and Patent Literature 2 is combined. The art described in Patent Literature 1 and Patent Literature 2 does not consider the increase in size of the battery, and still has a room for improvement.

It is an advantage of the present disclosure to provide a non-aqueous electrolyte secondary battery having improved cycle characteristics with increasing the battery capacity per unit volume.

### SOLUTION TO PROBLEM

A non-aqueous electrolyte secondary battery of an aspect of the present disclosure comprises: an electrode assembly in which a band-shaped positive electrode and a band-shaped negative electrode are wound with a separator interposed therebetween; a bottomed cylindrical exterior with greater than or equal to 25 mm in outer diameter that houses the electrode assembly and that is connected to the negative electrode; and a sealing assembly that seals an opening of an upper end of the exterior and that is connected to the positive electrode, wherein the positive electrode has a positive electrode current collector and a positive electrode mixture layer formed on a surface of the positive electrode current collector, the positive electrode mixture layer contains a positive electrode active material and a phosphorus compound, the positive electrode active material includes a lithium-containing composite oxide having a layered rock-salt structure, a basis weight of the positive electrode mixture layer is greater than or equal to 250 g/m², and in the electrode assembly, greater than or equal to three positive electrode leads are drawn out.

A non-aqueous electrolyte secondary battery of an aspect of the present disclosure comprises: an electrode assembly in which a band-shaped positive electrode and a band-shaped negative electrode are wound with a separator interposed therebetween; a bottomed cylindrical exterior with greater than or equal to 25 mm in outer diameter that houses the electrode assembly and that is connected to the negative electrode; and a sealing assembly that seals an opening of an upper end of the exterior and that is connected to the positive electrode, wherein the positive electrode has a positive electrode current collector and a positive electrode mixture layer formed on a surface of the positive electrode current collector, the positive electrode mixture layer contains a positive electrode active material and a phosphorus compound, the positive electrode active material includes a lithium-containing composite oxide having a layered rock-salt structure, a basis weight of the positive electrode mixture layer is greater than or equal to 250 g/m², and in the electrode assembly, the positive electrode protruding above the negative electrode and the separator is connected to a positive electrode current-collecting member, and the positive electrode current-collecting member and the sealing assembly are connected with a positive electrode lead.

### ADVANTAGEOUS EFFECT OF INVENTION

According to the non-aqueous electrolyte secondary battery of an aspect of the present disclosure, both of the increase in the capacity per unit volume and the improvement of the cycle characteristics may be achieved.

### BRIEF DESCRIPTION OF DRAWING

FIG. 1 is a vertical cross-sectional view of a non-aqueous electrolyte secondary battery of an example of an embodiment.
FIG. 2 is a front view of a positive electrode and a negative electrode that constitute an electrode assembly comprised in the non-aqueous electrolyte secondary battery in FIG. 1 in a developed state.
FIGS. 3(a) and 3(b) are plane views illustrating a position where positive electrode leads are arranged in an upper surface of an electrode assembly. FIG. 3(a) illustrates an example of arrangement in substantially one line in a radial direction, and FIG. 3(b) illustrates an example of arrangement with substantially same angles.
FIG. 4 is a vertical cross-sectional view of a non-aqueous electrolyte secondary battery of another example of an embodiment.
FIG. 5 is a perspective view of an electrode assembly comprised in the non-aqueous electrolyte secondary battery in FIG. 3, and is a view illustrating constitution of a positive electrode, negative electrode, and separator in a state where a proximity of an outside end of winding is developed.

### DESCRIPTION OF EMBODIMENTS

In recent years, increase in size of a battery has been investigated for a purpose of increasing a battery capacity per unit volume. The present inventors have made intensive investigation, and consequently found that an enlarged battery accumulates heat inside the battery due to charge and discharge, and easily causes side reactions such as decomposition of an electrolyte and elution of a transition metal from a positive electrode active material, leading to deterioration of cycle characteristics compared with a conventional battery. To solve this problem, the present inventors have made further investigation to found that the cycle characteristics are improved by adding a phosphorus compound together with the positive electrode active material into a positive electrode mixture layer. This is presumably because the phosphorus compound protects a surface of the positive electrode active material, and the side reactions in a high-temperature state may be inhibited. The increase in the capacity per unit volume of a secondary battery may be attempted by setting an outer diameter of the battery to greater than or equal to 25 mm, by setting a basis weight of the positive electrode mixture layer to greater than or equal to 250 g/m², and by setting connection between the positive electrode and a sealing assembly to a predetermined aspect, and the cycle characteristics of the secondary battery may be improved by containing the phosphorus compound into the positive electrode mixture layer.

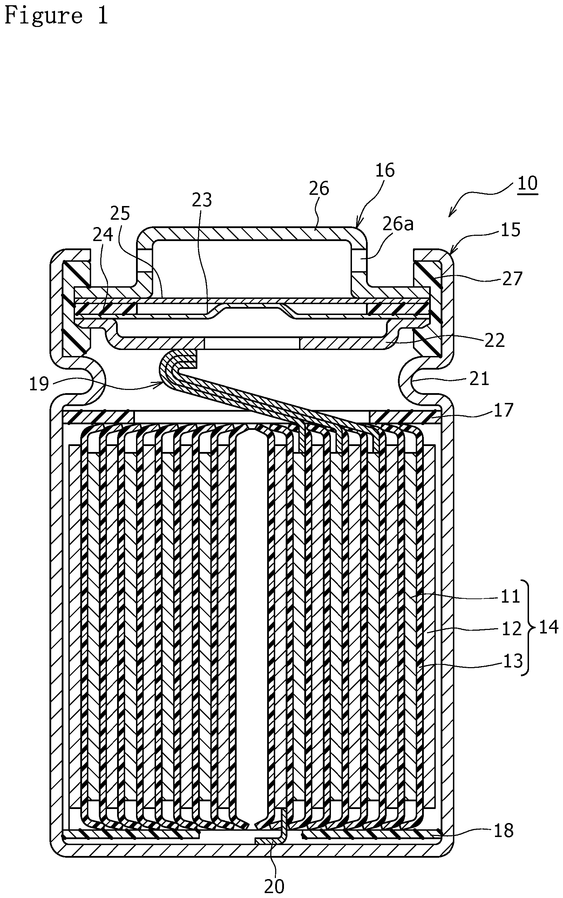

Hereinafter, an example of an embodiment of the non-aqueous electrolyte secondary battery according to the present disclosure will be described in detail with reference to FIG. 1 to FIG. 3. In the following description, specific shapes, materials, values, directions, and the like, which are examples for facilitating understanding of the present invention, may be appropriately modified with specifications of non-aqueous electrolyte secondary batteries. When a plurality of embodiments and modified examples are included in the following description, use in appropriate combination of characteristic portions thereof are anticipated in advance. When the term "substantially" is used herein, the term is used as the same meaning as the term "approximately", and the requirement "substantially" is satisfied by being virtually same.

FIG. 1 is a vertical cross-sectional view of a non-aqueous electrolyte secondary battery 10 of an example of an embodiment. In the secondary battery 10 illustrated in FIG. 1, an electrode assembly 14 and an electrolyte liquid (not illustrated) are housed in an exterior 15. The electrode assembly 14 has a wound structure in which a band-shaped positive electrode 11 and a band-shaped negative electrode 12 are wound with a separator 13 interposed therebetween. As a non-aqueous solvent (organic solvent) of the electrolyte liquid, any of carbonates, lactones, ethers, ketones, esters, and the like may be used, and two or more of these solvents may be mixed for use. When two or more of the solvents are mixed for use, a mixed solvent including a cyclic carbonate and a chain carbonate is preferably used. For example, ethylene carbonate (EC), propylene carbonate (PC), butylene carbonate (BC), or the like may be used as the cyclic carbonate, and dimethyl carbonate (DMC), ethyl methyl carbonate (EMC), diethyl carbonate (DEC), or the like may be used as the chain carbonate. As an electrolyte salt of the electrolyte liquid, LiPF₆, LiBF₄, LiCF₃SO₃, or the like, or a mixture thereof may be used. An amount of the electrolyte salt to be dissolved in the non-aqueous solvent may be, for example, greater than or equal to 0.5 mol/L and less than or equal to 2.0 mol/L. Hereinafter, for convenience of description, the side of the sealing assembly 16 will be described as the "upper side", and the bottom side of the exterior 15 will be described as the "lower side".

The opening of the upper end of the exterior 15 is sealed with the sealing assembly 16 to seal an inside of the secondary battery 10. Insulating plates 17 and 18 are provided on the upper and lower sides of the electrode assembly 14, respectively. Positive electrode leads 19 vertically extend through a through hole of the insulating plate 17, and connects a filter 22, which is a bottom plate of the sealing assembly 16, and the positive electrode 11 included in the electrode assembly 14. According to this, the positive electrode 11 and the sealing assembly 16 are connected, and in the secondary battery 10, a cap 26, which is a top plate of the sealing assembly 16 electrically connected to the filter 22, becomes a positive electrode terminal. The positive electrode lead 19 is an aluminum lead, for example. Meanwhile, a negative electrode lead 20 extends through a through hole of the insulating plate 18 toward a bottom side of the exterior 15, and is welded with an bottom inner surface of the exterior 15. According to this, the negative electrode 12 and the exterior 15 are connected, and in the secondary battery 10, the exterior 15 becomes a negative electrode terminal. The negative electrode lead 20 is a nickel lead, for example.

In the electrode assembly 14, three positive electrode leads 19 are drawn out. A number of the positive electrode leads 19 drawn out from the electrode assembly 14 may be greater than or equal to three. According to this, connecting resistance between the positive electrode 11 and the sealing assembly 16 may be reduced, and thereby the output characteristics of the secondary battery 10 may be improved. Since a larger number of the positive electrode leads 19 more reduces the connecting resistance but more increases the cost of the secondary battery 10, the number of the positive electrode leads 19 is preferably greater than or equal to three and less than or equal to ten, more preferably greater than or equal to three and less than or equal to eight, and particularly preferably greater than or equal to three and less than or equal to six from the viewpoint of achievement of both of the effect of reducing the connecting resistance and the cost. The greater than or equal to three positive electrode leads 19 drawn out from the electrode assembly 14 may be directly connected to the sealing assembly 16, or may be connected to the sealing assembly 16 via a known current collecting member. A connection aspect between the negative electrode 12 and the exterior 15 are not particularly limited, and may be connected with a plurality of the negative electrode leads 20.

The exterior 15 has a bottomed cylindrical shape with greater than or equal to 25 mm in outer diameter. The outer diameter of the exterior 15 is preferably greater than or equal to 30 mm, and more preferably greater than or equal to 35 mm. The outer diameter of the exterior 15 may be greater than or equal to 38 mm, may be greater than or equal to 40 mm, may be greater than or equal to 45 mm, or may be greater than or equal to 50 mm. The outer diameter of the exterior 15 may be less than or equal to 60 mm, for example. This range may improve the battery capacity per unit volume of the secondary battery 10. A thickness of the exterior 15 is, for example, greater than or equal to 0.1 mm and less than or equal to 2 mm. An inner diameter of the exterior 15 is preferably greater than or equal to 24 mm, more preferably greater than or equal to 29 mm, and particularly preferably greater than or equal to 34 mm. The inner diameter of the exterior 15 may be greater than or equal to 37 mm, may be greater than or equal to 39 mm, may be greater than or equal to 44 mm, or may be greater than or equal to 49 mm. The exterior 15 is, for example, a metallic exterior housing can. A gasket 27 is provided between the exterior 15 and the sealing assembly 16 to achieve sealability inside the secondary battery 10. The exterior 15 has a grooved portion 21 formed by, for example, pressing the side wall thereof from the outside to support the sealing assembly 16. The grooved portion 21 is preferably formed in a circular shape along a circumferential direction of the exterior 15, and supports the sealing assembly 16 with the upper face thereof.

The sealing assembly 16 has the filter 22, a lower vent member 23, an insulating member 24, an upper vent member 25, and the cap 26, which are stacked in this order from the electrode assembly 14 side. Each member constituting the sealing assembly 16 has, for example, a disk shape or a ring shape, and the members except for the insulating member 24 are electrically connected to each other. The lower vent member 23 and the upper vent member 25 are connected to each other at each of the centers, and the insulating member 24 is interposed between the circumferences. If the internal pressure of the battery increases due to abnormal heat generation, for example, the lower vent member 23 breaks and thereby the upper vent member 25 expands toward the cap 26 side to be separated from the lower vent member 23, resulting in breakage of electrical connection between both the members. If the internal pressure further increases, the upper vent member 25 breaks, and gas is discharged through an opening 26a of the cap 26.

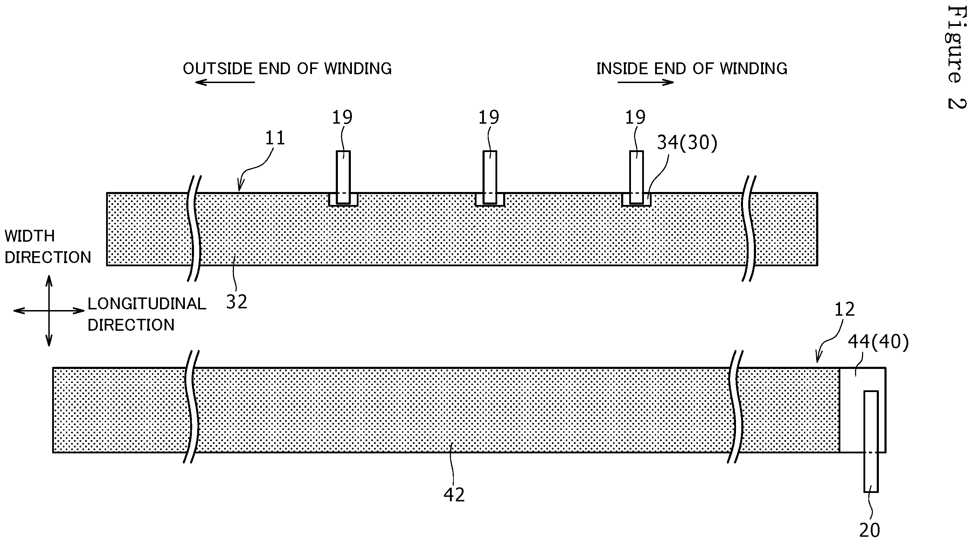

Next, the connection aspect between the positive electrode 11 and the positive electrode leads 19 will be described with reference to FIG. 2. FIG. 2 is a front view of the positive electrode 11 and the negative electrode 12 that constitute the electrode assembly 14 comprised in the secondary battery 10 in FIG. 1 in a developed state. The positive electrode 11 has a positive electrode current collector 30 and a positive electrode mixture layer 32 formed on a surface of the positive electrode current collector 30. The negative electrode 12 has a negative electrode current collector 40 and a negative electrode mixture layer 42 formed on a surface of the negative electrode current collector 40.

As illustrated in FIG. 2, the positive electrode 11 has a plurality of positive electrode current collector exposed portions 34 where the positive electrode current collector 30 is exposed on an upper end along a longitudinal direction, and the positive electrode mixture layer 32 is present between the positive electrode current collector exposed portions 34. One of the positive electrode leads 19 is connected to each of the positive electrode current collector exposed portions 34. The connection between the positive electrode lead 19 and the positive electrode 11 with such a form may increase an area of the positive electrode mixture layer 32, and thereby output characteristics of the secondary battery 10 may be improved. Meanwhile, the negative electrode 12 has a negative electrode current collector exposed portion 44 where a negative electrode current collector 40 is exposed on an inside end of winding in the longitudinal direction. A negative electrode lead 20 is connected to the negative electrode current collector exposed portion 44.

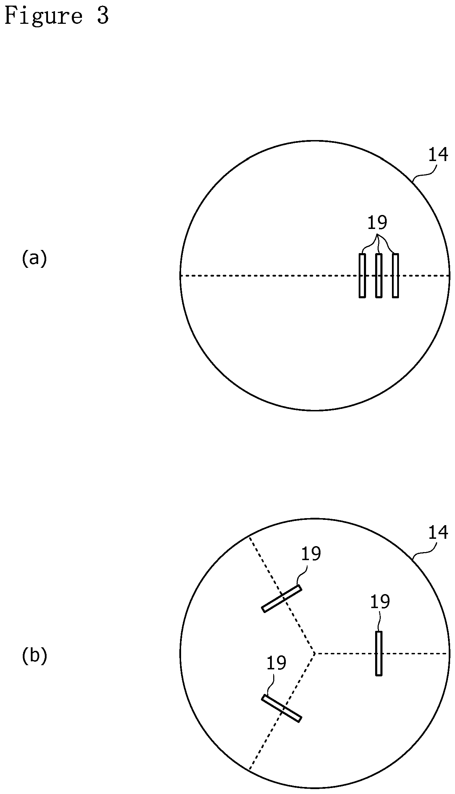

Next, arrangement of the positive electrode leads 19 will be described with reference to FIG. 3(a) and FIG. 3(b). FIG. 3(a) and FIG. 3(b) are both plane views illustrating a position where the positive electrode leads 19 are arranged in an upper surface of the electrode assembly 14.

The positive electrode leads 19 may be arranged in substantially one line in a radial direction, as illustrated in FIG. 3(a). This facilitates bundling of the positive electrode leads 19, and facilitates bonding of the positive electrode leads 19 to the filter 22. Although all the positive electrode leads 19 are disposed on one side relative to a center of the electrode assembly 14 in FIG. 3(a), the positive electrode leads 19 may be disposed on both sides relative to the center of the electrode assembly 14. The positive electrode leads 19 may be bonded to the filter 22 at a plurality of positions.

The positive electrode leads 19 may be arranged with substantially same angles as illustrated in FIG. 3(b). This facilitates bonding to the filter 22 without obstruction of each of the plurality of the positive electrode leads 19 by the other positive electrode leads 19.

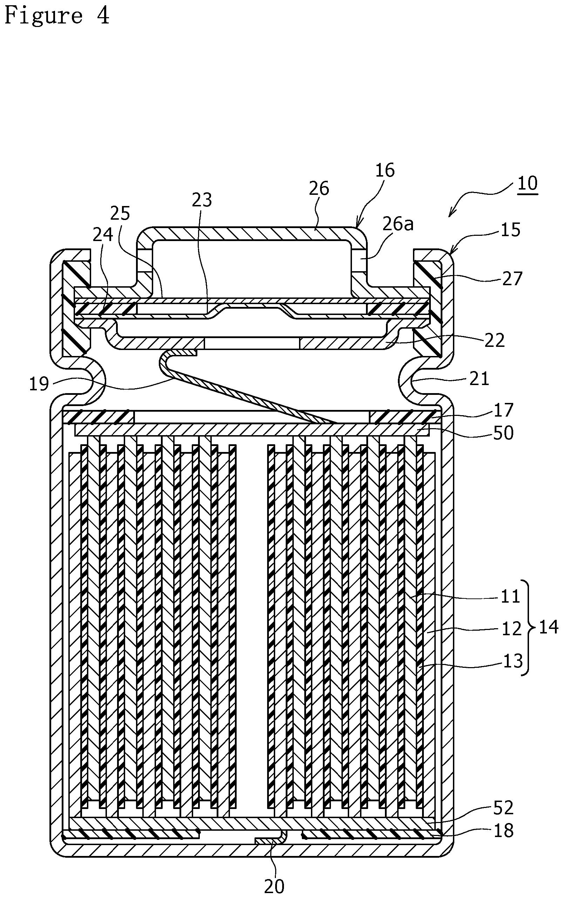

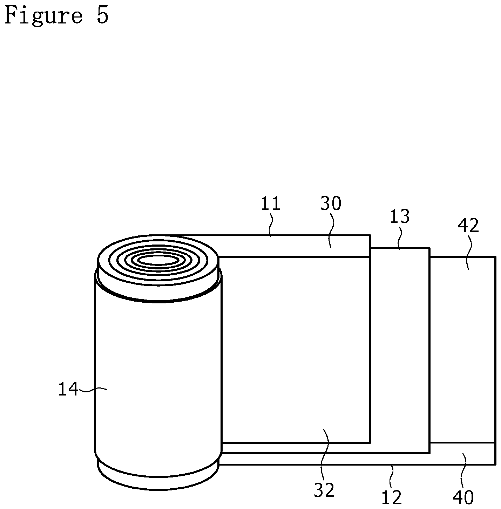

Hereinafter, another example of an embodiment of the non-aqueous electrolyte secondary battery according to the present disclosure will be described in detail with reference to FIG. 4 and FIG. 5. In the following embodiment, a same construction as in the embodiment illustrated in FIG. 1 is followed by a same sign as in the embodiment illustrated in FIG. 1 to omit the description. In the following embodiment, description about effects and modified examples same as in the embodiment illustrated in FIG. 1 will be omitted.

FIG. 4 is a view of the other example of the embodiment, which corresponds to FIG. 1. As illustrated in FIG. 4, the positive electrode 11 included in the electrode assembly 14 is connected to a positive electrode current collecting member 50, and the positive electrode current collecting member 50 and the sealing assembly 16 are connected with the positive electrode lead 19. This makes connection between the positive electrode 11 and the sealing assembly 16, and in the secondary battery 10, the cap 26, which is the top plate of the sealing assembly 16 electrically connected to the filter 22, becomes the positive electrode terminal. The negative electrode 12 included in the electrode assembly 14 is connected to a negative electrode current collecting member 52, and the negative electrode current collecting member 52 and the exterior 15 are connected with the negative electrode lead 20. This makes connection between the negative electrode 12 and the exterior 15, and in the secondary battery 10, the exterior 15 becomes the negative electrode terminal. The connection aspect between the negative electrode 12 and the exterior 15 is not particularly limited, and may be connected with the negative electrode lead 20, similarly to the embodiment illustrated in FIG. 1, for example.

A material, shape, and the like of the positive electrode current collecting member 50 are not particularly limited as long as it is connectable to the positive electrode 11 and the sealing assembly 16. For example, the positive electrode current collecting member 50 may be a disk-shaped member made of aluminum. The positive electrode current collecting member 50 may have a hole or a plurality of holes at any position from the viewpoints of circulation of the electrolyte liquid, and the like. A material, shape, and the like of the negative electrode current collecting member 52 are not particularly limited as long as it is connectable to the negative electrode 12 and the exterior 15. For example, the negative electrode current collector 52 may be a disk-shaped member made of nickel. The negative electrode current collecting member 52 may have a hole or a plurality of holes at any position from the viewpoints of circulation of the electrolyte liquid, and the like.

Next, constitution of the electrode assembly 14 will be described with reference to FIG. 5. FIG. 5 is a perspective view of the electrode assembly 14 of the secondary battery 10 illustrated in FIG. 4, and is a view illustrating constitution of the positive electrode 11, negative electrode 12, and separator 13 in a state where a proximity of an outside end of winding is developed. In the electrode assembly 14, the positive electrode 11 protrudes above the negative electrode 12 and the separator 13. This connects the positive electrode 11 to the positive electrode current collecting member 50. As illustrated in FIG. 5, the positive electrode 11 may have the positive electrode current collector exposed portion 34 where the positive electrode current collector 30 is exposed on the upper end. This may more certainly make the connection between the positive electrode 11 and the positive electrode current collecting member 50. Meanwhile, the negative electrode 12 protrudes below the positive electrode 11 and the separator 13. This connects the negative electrode 12 to the negative electrode current collecting member 52. As illustrated in FIG. 5, the negative electrode 12 may have the negative electrode current collector exposed portion 44 where negative electrode current collector 40 is exposed on the lower end. This may more certainly make the connection between the negative electrode 12 and the negative electrode current collecting member 52.

Hereinafter, the positive electrode 11, negative electrode 12, and separator 13, which constitute the electrode assembly 14, particularly the positive electrode 11, will be described in detail. The positive electrode 11, the negative electrode 12, and the separator 13, described hereinafter, are applicable for any of the aforementioned embodiments.

### [Positive Electrode]

The positive electrode 11 has the positive electrode current collector 30 and the positive electrode mixture layer 32 formed on the surface of the positive electrode current collector 30. The positive electrode mixture layer 32 is preferably formed on both surfaces of the positive electrode current collector 30. For the positive electrode current collector 30, a foil of a metal stable within a potential range of the positive electrode 11, such as aluminum and an aluminum alloy, a film in which such a metal is disposed on a surface layer thereof, and the like may be used.

The positive electrode mixture layer 32 contains a positive electrode active material and a phosphorus compound. According to this, cycle characteristics of the secondary battery 10 are improved. This is presumably because the phosphorus compound protects a surface of the positive electrode active material, and side reactions in a high-temperature state may be inhibited.

A basis weight of the positive electrode mixture layer 32 is greater than or equal to 250 g/m². According to this, a cost of the secondary battery 10 may be reduced. The basis weight of the positive electrode mixture layer 32 may be less than or equal to 400 g/m². A thickness of the positive electrode mixture layer 32 is, for example, greater than or equal to 10 µm and less than or equal to 150 µm on one side of the positive electrode current collector 30.

The positive electrode active material included in the positive electrode mixture layer 32 includes a lithium-containing composite oxide having a layered rock-salt structure. The lithium-containing composite oxide may include secondary particles formed by aggregation of a plurality of primary particles. A particle diameter of the primary particles constituting the secondary particles is, for example, greater than or equal to 0.05 µm and less than or equal to 1 µm. The particle diameter of the primary particle is measured as a diameter of a circumscribed circle in a particle image observed with a scanning electron microscope (SEM).

A median diameter (D50) on a volumetric basis of the secondary particles of the lithium-containing composite oxide is, for example, greater than or equal to 1 µm and less than or equal to 30 µm, and preferably greater than or equal to 3 µm and less than or equal to 20 µm. The D50 means a particle diameter at which a cumulative frequency is 50% from a smaller particle diameter side in a particle size distribution on a volumetric basis. The particle size distribution of the composite oxide (Z) may be measured by using a laser diffraction-type particle size distribution measuring device (for example, MT3000II, manufactured by MicrotracBEL Corp.) with water as a dispersion medium.

The positive electrode active material may be a mixture of: particles having a median diameter (D50) on a volumetric basis of greater than or equal to 14 µm; and particles having D50 of less than or equal to 6 µm. According to this, a filling density of the positive electrode active material may be increased, and thereby the battery capacity may be increased. The particles having D50 of greater than or equal to 14 µm and the particles having D50 of less than or equal to 6 µm are secondary particles, for example.

The layered rock-salt structure of the lithium-containing composite oxide belongs to, for example, the space group R-3m, the space group C2/m, or the like. In terms of increasing the capacity, stability of the crystal structure, and the like, the lithium-containing composite oxide preferably has a layered rock-salt structure belonging to the space group R-3m. The layered rock-salt structure of the lithium-containing composite oxide may include a transition metal layer, a Li layer, and an oxygen layer. By the Li layer reversibly intercalating and deintercalating Li ions present in the Li layer, charge-discharge reactions of a battery proceed.

The lithium-containing composite oxide contains Ni, for example, and a content rate of Ni in the lithium-containing composite oxide may be greater than or equal to 70 mol% and less than or equal to 95 mol% relative to a total number of moles of metal elements excluding Li. This yields a battery with a high capacity. The rate of Ni relative to the total number of moles of the metal elements excluding Li in the lithium-containing composite oxide is preferably greater than or equal to 80 mol%. This yields a battery with a higher capacity.

The lithium-containing composite oxide may be a composite oxide represented by the general formula LiₐNiₓCo_{y}Al_{z}Mn_{w}M1ᵥO_{2-b}, wherein 0.95 ≤ a ≤ 1.05, 0.7 ≤ x ≤ 0.95, 0 ≤ y ≤ 0.15, 0 ≤ z ≤ 0.1, 0 ≤ w ≤ 0.3, 0 ≤ v ≤ 0.1, 0 ≤ b ≤ 0.05, x+y+z+w+v=1, and M1 includes at least one element selected from the group consisting of Fe, Ti, Si, Nb, Zr, Mo, W, and Zn. The positive electrode active material may include a lithium-containing composite oxide other than that represented by the above general formula or another compound within a range not impairing the object of the present disclosure. The mole fractions of the metal elements contained in entire particles of the lithium-containing composite oxide are measured by inductively coupled plasma (ICP) atomic emission spectrometry.

The phosphorus compound included in the positive electrode mixture layer 32 is an additive. The phosphorus compound is, for example, a phosphate salt, and the phosphate salt is at least one compound selected from the group consisting of trilithium phosphate (Li₃PO₄), lithium hydrogen phosphate (Li₃₋ₓHₓPO₄ (0≤x<3)), trisodium phosphate (Na₃PO₄), tripotassium phosphate (K₃PO₄), magnesium phosphate (Mg₃(PO₄)₂·8H₂O), and aluminum phosphate (AlPO₄). The phosphorus compound is preferably trilithium phosphate or lithium hydrogen phosphate (Li₃₋ₓHₓPO₄ (0≤x<3)). Since the phosphorus compound including lithium reduces reaction resistance on the surface of the positive electrode active material, the cycle characteristics of the battery may be further improved.

A content of the phosphorus compound in the positive electrode mixture layer 32 is, for example, greater than or equal to 0.05 parts by mass and less than or equal to 1 part by mass relative to 100 parts by mass of an amount of the positive electrode active material contained in the positive electrode mixture layer 32. The content of the phosphorus compound may be measured by ICP emission spectrometry.

The phosphorus compound preferably adheres to surfaces of secondary particles of the lithium-containing composite oxide. According to this, the cycle characteristics of the battery may be further improved. In addition, the phosphorus compound may adhere to surfaces of primary particles of the lithium-containing composite oxide. The phosphorus compound may be evenly present on an entire surface of the secondary particles of the lithium-containing composite oxide, or may be unevenly present on a part thereof, for example. The presence of the phosphorus compound on the surface of the lithium-containing composite oxide may be confirmed by energy dispersive X-ray spectrometry (TEM-EDX).

Next, producing direction of the positive electrode mixture layer 32 will be described. The positive electrode mixture layer 32 may be produced by, for example, applying a positive electrode slurry including the positive electrode active material, the phosphorus compound, and the like on a surface of the positive electrode current collector 30, and drying and subsequently compressing the coating. The phosphorus compound may be added together with the positive electrode active material in producing the positive electrode slurry, for example. The phosphorus compound may also be added so as to adhere the surface of the positive electrode active material in manufacturing the positive electrode active material, as described hereinafter.

A method for manufacturing the positive electrode active material includes: a first step of obtaining a composite oxide including Ni and an optional metal element; a second step of obtaining a mixture by mixing the composite oxide obtained in the first step and a Li compound; and a third step of calcining the mixture, for example. As described later, the phosphorus compound may adhere to a surface of the lithium-containing composite oxide obtained in the third step.

In the first step, for example, with stirring a solution of metal salts including Ni and the optional metal elements such as Al, Mn, and Co, a solution of an alkali such as sodium hydroxide is added dropwise in order to adjust a pH on the alkaline side (for example, greater than or equal to 8.5 and less than or equal to 12.5) to precipitate (coprecipitate) a composite hydroxide including Ni, Al, and the optional metal elements. This composite hydroxide is calcined to obtain a composite oxide including Ni, Al, and the optional metal elements. The calcining temperature is not particularly limited, and may be, for example, within a range of greater than or equal to 300°C and less than or equal to 600°C.

In the second step, the composite oxide obtained in the first step and the Li raw material may be mixed to obtain the mixture. Examples of the Li raw material include Li₂CO₃, LiOH, LizOz, Li₂O, LiNO₃, LiNO₂, LiOH·H₂O, and LiH. A mixing ratio between the composite oxide and the Li raw material is appropriately decided so that each element in the finally obtained lithium-containing composite oxide has a desired rate. A mole ratio of Li to the metal elements excluding Li is preferably a mole ratio of the metal elements excluding Li : Li being within a range of greater than or equal to 1:0.9 and less than or equal to 1:1.3. When the composite oxide obtained in the first step and the Li compound are mixed in the second step, another metal raw material may be added as necessary. The other metal raw material is oxides and the like including a metal element other than the metal elements constituting the composite oxide obtained in the first step.

In the third step, the mixture obtained in the second step may be calcined under an oxygen atmosphere to obtain the lithium-containing composite oxide according to the present embodiment. In the third step, a heating rate within greater than or equal to 450°C and less than or equal to 680°C may be within a range of greater than 0.1 °C/min and less than or equal to 5.5 °C/min, and a highest reaching temperature may be within a range of greater than or equal to 700°C and less than or equal to 850°C. A heating rate from greater than 680°C to the highest reaching temperature may be, for example, greater than or equal to 0.1 °C/min and less than or equal to 3.5 °C/min. A holding time at the highest reaching temperature may be greater than or equal to 1 hour and less than or equal to 10 hours. The third step may be a multi-step calcination, and a plurality of the first heating rates and the second heating rates may be set in each temperature range as long as the first heating rates and the second heating rates are within the above determined ranges.

The powder of the lithium-containing composite oxide obtained in the third step may be washed with water. This water washing has a purpose of improving the battery capacity and safety, and may be performed by a known method under known conditions. Into the lithium-containing composite oxide during the water washing, a phosphorus-containing solution in which pH is regulated to greater than or equal to 1 and less than or equal to 3 by using LiOH may be added, and the mixture may be filtered and then dried. Here, the phosphorus-containing solution is a liquid to be a raw material of the phosphorus compound included in the positive electrode mixture layer 32. The solution is, for example, an aqueous solution containing phosphorus, and more specifically phosphoric acid (H₃PO₄). The lithium-containing composite oxide during the water washing may be added into the phosphorus-containing solution, and the mixture may be filtered and then dried.

A concentration of the phosphorus-containing solution to be added during the water washing is, for example, greater than or equal to 0.2 mass% and less than or equal to 40 mass%. A lower concentration increases an amount of the solution and needs a longer time for filtering, and a higher concentration causes more difficulty in evenly adhering the phosphorus compound to the surface of the lithium-containing composite oxide. When the concentration of the phosphorus-containing solution is greater than or equal to 0.2 mass% and less than or equal to 40 mass%, the phosphorus compound may evenly adhere to the surface of the lithium-containing composite oxide within an appropriate filtering time.

An amount of the phosphorus-containing solution to be added during the water washing is, for example, greater than or equal to 2 mass% and less than or equal to 20 mass% relative to an amount of the lithium-containing composite oxide. The amount of the phosphorus-containing solution to be added during the water washing is preferably greater than or equal to 20 ml and less than or equal to 200 ml relative to 1 kg of the lithium-containing composite oxide.

Into the lithium-containing composite oxide after the water washing and the filtering, a lithium-containing solution in which pH is regulated to greater than or equal to 1 and less than or equal to 3 by using LiOH may be added, and dried. Alternatively, into the lithium-containing composite oxide without water washing, the phosphorus-containing solution may be added and dried. According to the above method, the phosphorus compound may adhere to the surface of the lithium-containing composite oxide.

A concentration of the phosphorus-containing solution to be added before the drying is, for example, greater than or equal to 0.3 mass% and less than or equal to 60 mass%. A lower concentration increases an amount of the solution and needs a longer time for drying, and a higher concentration causes more difficulty in evenly adhering the phosphorus compound to the surface of the lithium-containing composite oxide. When the concentration of the phosphorus-containing solution is greater than or equal to 0.3 mass% and less than or equal to 60 mass%, the phosphorus compound may evenly adhere to the surface of the lithium-containing composite oxide within an appropriate drying time.

An amount of the phosphorus-containing solution to be added before the drying is, for example, greater than or equal to 1 mass% and less than or equal to 15 mass% relative to an amount of the lithium-containing composite oxide. The amount of the phosphorus-containing solution to be added before the drying is preferably greater than or equal to 10 ml and less than or equal to 150 ml relative to 1 kg of the lithium-containing composite oxide.

The positive electrode mixture layer 32 may further contain a binder. Examples of the binder include fluororesins such as polytetrafluoroethylene (PTFE) and polyvinylidene fluoride (PVDF), polyacrylonitrile (PAN), a polyimide, an acrylic resin, and a polyolefin. With these resins, cellulose derivatives such as carboxymethylcellulose (CMC) or a salt thereof, polyethylene oxide (PEO), and the like may be used in combination. A content of the binder is preferably greater than or equal to 0.1 mass% and less than or equal to 5 mass%, and more preferably greater than or equal to 0.5 mass% and less than or equal to 3 mass% relative to a total mass of the positive electrode mixture layer 32.

The positive electrode mixture layer 32 may further contain a conductive agent. Examples of the conductive agent include: particle conductive agents such as carbon black, acetylene black, Ketjenblack, and graphite; and fibrous conductive agents such as vapor-grown carbon fiber (VGCF), electrospinning carbon fiber, polyacrylonitrile (PAN)-based carbon fiber, pitch-based carbon fiber, graphene, and carbon nanotube (CNT). A content of the conductive agent is preferably greater than or equal to 0.01 mass% and less than or equal to 5 mass%, and more preferably greater than or equal to 0.05 mass% and less than or equal to 3 mass% relative to the total mass of the positive electrode mixture layer 31.

The positive electrode mixture layer 32 may further contain Li₂NiO₂. Li₂NiO₂ contains much Li, and functions as a Li-supplying agent to supply Li ions to the negative electrode 12 during an initial charge. Li₂NiO₂ may have structure identified with the space group Immm.

A mass of Li₂NiO₂ included in the positive electrode mixture layer 32 may be greater than or equal to 1 part by mass and less than or equal to 10 parts by mass relative to 100 parts by mass of the positive electrode active material included in the positive electrode mixture layer 32. The mass of Li₂NiO₂ included in the positive electrode mixture layer 32 of greater than or equal to 1 part by mass may supply a sufficient amount of Li ions to the negative electrode. As described later, at least a part of Li₂NiO₂ changes to a compound represented by the general formula LiₐNi₂₋ₐO₂ (0 < a ≤ 0.5). If the mass of Li₂NiO₂ included in the positive electrode mixture layer 32 is greater than 10 parts by mass, the battery capacity decreases because the compound represented by the general formula LiₐNi₂₋ₐO₂ (0 < a ≤ 0.5) less contributes to the charge-discharge capacity than the lithium-containing composite oxide.

A part or all of Li₂NiO₂ after initial charge and discharge changes to the compound represented by the general formula LiₐNi₂₋ₐO₂ (0 < a ≤ 0.5), for example. That is, the positive electrode mixture layer 32 may further contain the compound represented by the general formula LiₐNi₂₋ₐO₂ (0 < a ≤ 0.5). The compound represented by LiₐNi₂₋ₐO₂ (0 < a ≤ 0.5) releases and occludes Li ions in charge and discharge to function as the positive electrode active material.

A mass of the compound represented by LiₐNi₂₋ₐO₂ (0 < a ≤ 0.5) included in the positive electrode mixture layer 32 may be greater than or equal to 0.1 part by mass and less than or equal to 5 parts by mass relative to 100 parts by mass of the positive electrode active material included in the positive electrode mixture layer 32. When the mass of the compound represented by the general formula LiₐNi₂₋ₐO₂ (0 < a ≤ 0.5) included in the positive electrode mixture layer 32 is greater than or equal to 0.1 part by mass, a sufficient amount of Li ions may be supplied to the negative electrode. If the mass of the compound represented by the general formula LiₐNi₂₋ₐO₂ (0 < a ≤ 0.5) included in the positive electrode mixture layer 32 is greater than 5 parts by mass, the battery capacity decreases because the compound represented by the general formula LiₐNi₂₋ₐO₂ (0 < a ≤ 0.5) less contributes to the charge-discharge capacity than the lithium-containing composite oxide.

### [Negative Electrode]

The negative electrode 12 has the negative electrode current collector 40 and the negative electrode mixture layer 42 formed on the surface of the negative electrode current collector 40. The negative electrode mixture layer 42 is preferably formed on both surfaces of the negative electrode current collector 40. For the negative electrode current collector 40, a foil of a metal stable within a potential range of the negative electrode 12, such as copper and a copper alloy, a film in which such a metal is disposed on a surface layer thereof, and the like may be used. The negative electrode mixture layer 42 may include a negative electrode active material, a binder, and the like. The negative electrode 12 may be produced by, for example, applying a negative electrode mixture slurry including the negative electrode active material, the binder, and the like on the surface of the negative electrode current collector 40, and drying and subsequently compressing the coating to form the negative electrode mixture layers 42 on both the surfaces of the negative electrode current collector 40.

The negative electrode active material included in the negative electrode mixture layer 42 is not particularly limited as long as it may reversibly occlude and release lithium ions, and carbon materials such as graphite are typically used. The graphite may be any of natural graphite such as flake graphite, massive graphite, and amorphous graphite, and artificial graphite such as massive artificial graphite and graphitized mesophase carbon microbead. As the negative electrode active material, a metal that forms an alloy with Li, such as Si and Sn, a metal compound including Si, Sn, and the like, a lithium-titanium composite oxide, and the like may also be used. In addition, those in which a carbon coating is provided on these materials may also be used. For example, a Si-containing compound represented by SiOₓ (0.5 ≤ x ≤ 1.6), a Si-containing compound in which Si fine particles are dispersed in a lithium silicate phase represented by Li_{2y}SiO_{(2+y)} (0 < y < 2), or the like may be used in combination with the graphite.

For the binder included in the negative electrode mixture layer 42, a fluororesin, PAN, a polyimide, an acrylic resin, a polyolefin, and the like may be used as in the case of the positive electrode 11, but styrene-butadiene rubber (SBR) is preferably used. The negative electrode mixture layer 42 may include CMC or a salt thereof, polyacrylic acid (PAA) or a salt thereof, polyvinyl alcohol (PVA), and the like.

### [Separator]

For the separator 13, a porous sheet having an ion permeation property and an insulation property is used, for example. Specific examples of the porous sheet include a fine porous thin film, a woven fabric, and a nonwoven fabric. As a material for the separator, a polyolefin such as polyethylene and polypropylene, cellulose, and the like are suitable. The separator 13 may have a single-layered structure, or may have a stacked structure. On a surface of the separator 13, a resin layer having high heat resistance, such as an aramid resin, and a filler layer including a filler of an inorganic compound may be provided.

### EXAMPLES

Hereinafter, the present disclosure will be further described with Examples and Comparative Examples, but the present disclosure is not limited to the following Examples.

### [Production of Positive Electrode Active Material]

### <Example 1>

A composite hydroxide obtained by a coprecipitation method and represented by [Ni_{0.90}Co_{0.05}Al_{0.05}](OH)₂ was calcined at 500°C for 8 hours to obtain a composite oxide (Ni_{0.90}Co_{0.05}Al_{0.05}O₂) (the first step). Then, LiOH and the composite oxide were mixed so that a mole ratio between Li, and a total amount of Ni, Co, and Al was 1.03: 1 to obtain a mixture (the second step). This mixture was calcined under an oxygen flow with an oxygen concentration of 95% (a flow rate of 2 mL/min per 10 cm³ and 5 L/min per kilogram of the mixture) at a heating rate of 2.0 °C/min from a room temperature to 650°C, and then calcined at a heating rate of 0.5 °C/min from 650°C to 780°C to obtain a positive electrode active material (the third step). The composition of the positive electrode active material was confirmed with an ICP emission spectrometer to be LiNi_{0.90}Co_{0.05}Al_{0.05}O₂.

### [Production of Positive Electrode]

Mixing 100 parts by mass of the positive electrode active material, 0.2 parts by mass of the trisodium phosphate (Na₃PO₄), 3 parts by mass of acetylene black (AB), and 2 parts by mass of polyvinylidene fluoride (PVDF) was performed, and then this mixture and N-methyl-2-pyrrolidone (NMP) were mixed to prepare a positive electrode slurry. Then, this slurry was applied on a positive electrode current collector composed of aluminum foil with 15 µm in thickness so that a basis weight was 250 g/m², the coating was dried and subsequently rolled with a roller, and the rolled product was cut to a predetermined electrode size to be housed in an exterior with φ50 mm in outer diameter to obtain a positive electrode in which positive electrode mixture layers were formed on both surfaces of the positive electrode current collector. An exposed portion where a surface of the positive electrode current collector was exposed was provided on an upper end of the positive electrode.

### [Production of Negative Electrode]

As a negative electrode active material, natural graphite was used. The negative electrode active material, sodium carboxymethylcellulose (CMC-Na), and styrene-butadiene rubber (SBR) were mixed at a solid-content mass ratio of 100:1:1 in an aqueous solution to prepare a negative electrode slurry. This negative electrode slurry was applied on both surfaces of a negative electrode current collector composed of copper foil, the coating was dried and subsequently rolled by using a roller, and the rolled product was cut to the predetermined electrode size to obtain a negative electrode in which negative electrode mixture layers were formed on both the surfaces of the negative electrode current collector. An exposed portion where a surface of the negative electrode current collector was exposed was provided on an inside end of winding of the negative electrode.

### [Preparation of Non-Aqueous Electrolyte]

Ethylene carbonate (EC), methyl ethyl carbonate (MEC), and dimethyl carbonate (DMC) were mixed at a volume ratio of 3:3:4. Into this mixed solvent, lithium hexafluorophosphate (LiPF₆) was dissolved so that the concentration was 1.2 mol/L to prepare a non-aqueous electrolyte.

### [Production of Test Cell]

As illustrated in FIG. 3(a), six aluminum leads were attached to the exposed portion of the positive electrode with the substantially same intervals so that three of the aluminum leads were each arranged in substantially one line in a radial direction of the electrode assembly across a center of an electrode assembly. One nickel lead was attached to the exposed portion of the negative electrode. The positive electrode and the negative electrode were spirally wound with a separator made of a polyolefin interposed therebetween to produce a wound electrode assembly. This electrode assembly was housed inside an exterior with 50 mm in outer diameter, the non-aqueous electrolyte was injected, and then an upper opening of the exterior was sealed with a sealing assembly to obtain a test cell.

### [Evaluation of Battery Capacity per Unit Volume]

Under a temperature environment at 25°C, the test cell was charged at a constant current of 0.1 C until a battery voltage reached 4.2 V, charged at a constant voltage of 4.2 V until a current value reached 0.01 C, and discharged at a constant current of 0.1 C until the battery voltage reached 2.5 V. Furthermore, under a temperature environment at 25°C, the test cell was charged at a constant current of 0.1 C until the battery voltage reached 4.2 V, charged at a constant voltage of 4.2 V until the current value reached 0.01 C, and then discharged at a constant current of 0.3 C until the battery voltage reached 2.5 V. A discharge capacity at this time was specified as an initial discharge capacity. The initial discharge capacity was divided by a volume of the test cell to calculate a battery capacity per unit volume. In the above charge and discharge, an interval for 10 minutes was provided when the charge was switched to the discharge.

### [Evaluation of Capacity Retention]

Under a temperature environment at 25°C, the test cell was charged at a constant current of 0.1 C until a battery voltage reached 4.2 V, charged at a constant voltage of 4.2 V until a current value reached 0.01 C, and discharged at a constant current of 0.3 C until the battery voltage reached 2.5 V. This charge-discharge cycle was repeated with 100 cycles. A discharge capacity at the 1st cycle and a discharge capacity at the 100th cycle were determined to calculate a capacity retention with the following formula. Capacity retention (%) = (Discharge capacity at 100th cycle / Discharge capacity at 1st cycle) × 100

### <Example 2>

A test cell was produced and evaluated in the same manner as in Example 1 except that, in the production of the positive electrode, trilithium phosphate (Li₃PO₄) was used instead of Na₃PO₄.

### <Example 3>

A test cell was produced and evaluated in the same manner as in Example 1 except that, in the production of the positive electrode, tripotassium phosphate (K₃PO₄) was used instead of Na₃PO₄.

### <Example 4>

A test cell was produced and evaluated in the same manner as in Example 1 except that, in the production of the positive electrode, calcium phosphate (Ca₃(PO₄)₂) was used instead of Na₃PO₄.

### <Example 5>

A test cell was produced and evaluated in the same manner as in Example 1 except that, in the production of the positive electrode, magnesium phosphate (Mg₃(PO₄)₂·8H₂O) was used instead of Na₃PO₄.

### <Example 6>

A test cell was produced and evaluated in the same manner as in Example 1 except that, in the production of the positive electrode, aluminum phosphate (AlPO₄) was used instead of Na₃PO₄.

### <Example 7>

A test cell was produced and evaluated in the same manner as in Example 1 except that: in the production of the positive electrode active material, 1 L of water was added into 1500 g of the obtained positive electrode active material and washed with water, 100 ml of 2.5-mass% phosphoric acid (H₃PO₄) in which pH was regulated to 2 by using LiOH was added during the water washing, and the mixture was sucking-filtered and then dried to adhere the phosphorus compound to a surface of the positive electrode active material; and in the production of the positive electrode, Na₃PO₄ was not added. As a result by analysis with an ICP emission spectrometer and TEM-EDX, it was confirmed that: a phosphoric acid compound including lithium (lithium-phosphoric acid compound) adhered to the surface of the lithium-containing composite oxide represented by LiNi_{0.90}Co_{0.05}Al_{0.05}O₂; and an amount of the phosphoric acid compound was 0.2 parts by mass relative to 100 parts by mass of the lithium-containing composite oxide.

### <Comparative Example 1>

A test cell was produced and evaluated in the same manner as in Example 1 except that, in the production of the positive electrode, Na₃PO₄ was not added.

### <Comparative Example 2>

A test cell was produced and evaluated in the same manner as in Example 1 except that: in the production of the positive electrode, Li₃PO₄ was used instead of Na₃PO₄; and in the production of the test cell, a number of the aluminum leads was changed to one.

### <Comparative Example 3>

A test cell was produced and evaluated in the same manner as in Example 1 except that: in the production of the positive electrode, Li₃PO₄ was used instead of Na₃PO₄; and in the production of the positive electrode, the positive electrode slurry was applied so that the basis weight was 190 g/m².

### <Comparative Example 4>

A test cell was produced and evaluated in the same manner as in Example 1 except that: in the production of the positive electrode, Li₃PO₄ was used instead of Na₃PO₄; in the production of the positive electrode, cutting was performed to a predetermined electrode size to be housed in an exterior with φ20 mm in outer diameter to obtain the positive electrode; and in the production of the test cell, a number of the aluminum leads was changed to one, and the electrode assembly was housed in the exterior with φ20 mm in outer diameter.

### <Comparative Example 5>

A test cell was produced and evaluated in the same manner as in Example 1 except that: in the production of the positive electrode, Li₃PO₄ was used instead of Na₃PO₄; in the production of the positive electrode, cutting was performed to a predetermined electrode size to be housed in an exterior with φ20 mm in outer diameter to obtain the positive electrode; and in the production of the test cell, the electrode assembly was housed in the exterior with φ20 mm in outer diameter.

Table 1 shows the battery capacity per unit volume and the capacity retention of the test cells of Examples 1 to 7 and Comparative Examples 1 to 5. Table 1 also shows: the composition (a proportion of each metal element relative to a total number of moles of the metal elements excluding Li) and a median diameter (D50) on a volumetric basis of the lithium-containing composite oxide; a type, adding method, and content (an amount relative to 100 parts by mass of the positive electrode active material) of the added phosphorus compound; the outer diameter of the battery; the basis weight of the positive electrode mixture layer, the current-collecting aspect and the number of aluminum leads of the positive electrode; the battery capacity per unit volume; and a highest reaching voltage in the evaluation of the capacity retention. The battery capacity per unit volume shown in Table 1 is a relative evaluation based on Example 1. A case where the battery capacity is larger than that of Example 1 by greater than or equal to 5% is shown as "Excellent", a case where the battery capacity is comparable to that of Example 1 (less than ±5% relative to that of Example 1) is shown as "Good", a case where the battery capacity is smaller than that of Example 1 by greater than or equal to 5% and less than 10% is shown as "Fair", a case where the battery capacity is smaller than that of Example 1 by greater than or equal to 10% is shown as "Poor", and a case where the battery capacity is smaller than that of Example 1 by greater than or equal to 20% is shown as "Bad". The capacity retention of each of Examples and Comparative Examples shown in Table 1 is shown relative to the capacity retention of the test cell of Example 1 being 100.

**[Table 1]**

| | Lithium-containing composite oxide | | | | | Additive | | | Outer diameter of battery [mm] | Basis weight [g/m²] | Current collection with positive electrode | | Voltage [V] | Evaluation results | |
|---|---|---|---|---|---|---|---|---|---|---|---|---|---|---|---|
| | Composition [mol%] | | | | D50 [µm] | Type | Adding method | Content (/positive electrode active material) [parts by mass] | | | | | | | |
| | Ni | Co | Al | Mn | | | | | | | Aspect | Number of leads | | Battery capacity per unit volume | Capacity retention |
| Example 1 | 90 | 5 | 5 | 0 | 11 | Trisodium phosphate | Addition | 0.2 | 50 | 250 | One line | 6 | 4.2 | Good | 100 |
| Example 2 | 90 | 5 | 5 | 0 | 11 | Trilithium phosphate | Addition | 0.2 | 50 | 250 | One line | 6 | 4.2 | Good | 104 |
| Example 3 | 90 | 5 | 5 | 0 | 11 | Tripotassium phosphate | Addition | 0.2 | 50 | 250 | One line | 6 | 4.2 | Good | 100 |
| Example 4 | 90 | 5 | 5 | 0 | 11 | Calcium phosphate | Addition | 0.2 | 50 | 250 | One line | 6 | 4.2 | Good | 103 |
| Example 5 | 90 | 5 | 5 | 0 | 11 | Magnesium phosphate | Addition | 0.2 | 50 | 250 | One line | 6 | 4.2 | Good | 101 |
| Example 6 | 90 | 5 | 5 | 0 | 11 | Aluminum phosphate | Addition | 0.2 | 50 | 250 | One line | 6 | 4.2 | Good | 102 |
| Example 7 | 90 | 5 | 5 | 0 | 11 | Phosphoric acid | Adhesion | 0.2 | 50 | 250 | One line | 6 | 4.2 | Good | 107 |
| Comparative Example 1 | 90 | 5 | 5 | 0 | 11 | None | - | - | 50 | 250 | One line | 6 | 4.2 | Excellent | 81 |
| Comparative Example 2 | 90 | 5 | 5 | 0 | 11 | Trilithium phosphate | Addition | 0.2 | 50 | 250 | - | 1 | 4.2 | Fair | 88 |
| Comparative Example 3 | 90 | 5 | 5 | 0 | 11 | Trilithium phosphate | Addition | 0.2 | 50 | 190 | One line | 6 | 4.2 | Poor | 105 |
| Comparative Example 4 | 90 | 5 | 5 | 0 | 11 | Trilithium phosphate | Addition | 0.2 | 20 | 250 | - | 1 | 4.2 | Bad | 99 |
| Comparative Example 5 | 90 | 5 | 5 | 0 | 11 | Trilithium phosphate | Addition | 0.2 | 20 | 250 | One line | 6 | 4.2 | Bad | 103 |

### <Example 8>

A test cell was produced and evaluated in the same manner as in Example 1 except that: in the production of the positive electrode active material, the composition of the lithium-containing composite oxide was LiNi_{0.80}Al_{0.055}Mn_{0.145}O₂; in the production of the positive electrode, the positive electrode slurry was applied so that the basis weight was 325 g/m², and cutting was performed to a predetermined electrode size to be housed in an exterior with φ40 mm in outer diameter to obtain the positive electrode; and in the production of the test cell, the three aluminum leads were disposed at the substantially equivalent angles as illustrated in FIG. 3(b), and the electrode assembly was housed in the exterior with φ40 mm in outer diameter.

### <Example 9>

A test cell was produced and evaluated in the same manner as in Example 8 except that, in the production of the positive electrode, Li₃PO₄ was used instead of Na₃PO₄, and the addition amount of Li₃PO₄ was changed to 1 part by mass relative to 100 parts by mass of the positive electrode active material.

### <Example 10>

A test cell was produced and evaluated in the same manner as in Example 8 except that, in the production of the positive electrode, Li₃PO₄ was used instead of Na₃PO₄.

### <Example 11>

A test cell was produced and evaluated in the same manner as in Example 8 except that, in the production of the positive electrode, Li₃PO₄ was used instead of Na₃PO₄, and the addition amount of Li₃PO₄ was changed to 0.05 parts by mass relative to 100 parts by mass of the positive electrode active material.

### <Example 12>

A test cell was produced and evaluated in the same manner as in Example 8 except that: in the production of the positive electrode active material, 1 L of water was added into 1500 g of the obtained positive electrode active material and washed with water, phosphoric acid (H₃PO₄) in which pH was regulated to 2 by using LiOH was added during the water washing, and the mixture was sucking-filtered and then dried to adhere the phosphorus compound to a surface of the positive electrode active material; and in the production of the positive electrode, Na₃PO₄ was not added. As a result by analysis with an ICP emission spectrometer and TEM-EDX, it was confirmed that: a phosphoric acid compound including lithium (lithium-phosphoric acid compound) adhered to the surface of the lithium-containing composite oxide represented by LiNi_{0.80}Al_{0.055}Mn_{0.145}O₂; and an amount of the phosphoric acid compound was 0.2 parts by mass relative to 100 parts by mass of the lithium-containing composite oxide.

### <Comparative Example 6>

A test cell was produced and evaluated in the same manner as in Example 8 except that, in the production of the positive electrode, Na₃PO₄ was not added.

Table 2 shows the battery capacity per unit volume and the capacity retention of the test cells of Examples 8 to 12 and Comparative Example 6. Table 2 also shows the conditions similarly to Table 1. The battery capacity per unit volume shown in Table 2 is a relative evaluation based on Example 8. A case where the battery capacity is larger than that of Example 8 by greater than or equal to 5% is shown as "Excellent", and a case where the battery capacity is comparable to that of Example 8 is shown as "Good". The capacity retention of each of Examples and Comparative Example shown in Table 2 is shown relative to the capacity retention of the test cell of Example 8 being 100.

**[Table 2]**

| | Lithium-containing composite oxide | | | | | Additive | | | Outer diameter of battery [mm] | Basis weight [g/m²] | Current collection with positive electrode | | Voltage [V] | Evaluation results | |
|---|---|---|---|---|---|---|---|---|---|---|---|---|---|---|---|
| | Composition [mol%] | | | | D50 [µm] | Type | Adding method | Content (/positive electrode active material) [parts by mass] | | | | | | | |
| | Ni | Co | Al | Mn | | | | | | | Aspect | Number of leads | | Battery capacity per unit volume | Capacity retention |
| Example 8 | 80 | 0 | 5.5 | 14.5 | 11 | Trisodium phosphate | Addition | 0.2 | 40 | 325 | Equival ent | 3 | 4.2 | Good | 100 |
| Example 9 | 80 | 0 | 5.5 | 14.5 | 11 | Trilithium phosphate | Addition | 1 | 40 | 325 | Equival ent | 3 | 4.2 | Good | 105 |
| Example 10 | 80 | 0 | 5.5 | 14.5 | 11 | Trilithium phosphate | Addition | 0.2 | 40 | 325 | Equival ent | 3 | 4.2 | Good | 103 |
| Example 11 | 80 | 0 | 5.5 | 14.5 | 11 | Trilithium phosphate | Addition | 0.05 | 40 | 325 | Equival ent | 3 | 4.2 | Excellent | 96 |
| Example 12 | 80 | 0 | 5.5 | 14.5 | 11 | Lithium-phosphoric acid compound | Adhesion | 0.2 | 40 | 325 | Equival ent | 3 | 4.2 | Good | 104 |
| Comparative Example 6 | 80 | 0 | 5.5 | 14.5 | 11 | None | - | < | 40 | 325 | Equival ent | 3 | 4.2 | Excellent | 78 |

### <Example 13>

A test cell was produced and evaluated in the same manner as in Example 1 except that: in the production of the positive electrode active material, the composition of the lithium-containing composite oxide was LiNi_{0.80}Co_{0.045}Al_{0.055}Mn_{0.10}O₂; in the production of the positive electrode, the positive electrode slurry was applied so that the basis weight was 275 g/m², and cutting was performed to a predetermined electrode size to be housed in an exterior with φ40 mm in outer diameter to obtain the positive electrode; and in the production of the test cell, the three aluminum leads were disposed at the substantially equivalent angles as illustrated in FIG. 3(b), and the electrode assembly was housed in the exterior with φ40 mm in outer diameter.

### <Example 14>

A test cell was produced and evaluated in the same manner as in Example 13 except that, in the production of the positive electrode, Li₃PO₄ was used instead of Na₃PO₄.

### <Example 15>

A test cell was produced and evaluated in the same manner as in Example 13 except that: in the production of the positive electrode active material, 1 L of water was added into 1500 g of the obtained positive electrode active material and washed with water, phosphoric acid (H₃PO₄) in which pH was regulated to 2 by using LiOH was added during the water washing, and the mixture was sucking-filtered and then dried to adhere the phosphorus compound to a surface of the positive electrode active material; and in the production of the positive electrode, Na₃PO₄ was not added. As a result by analysis with an ICP emission spectrometer and TEM-EDX, it was confirmed that: a phosphoric acid compound including lithium (lithium-phosphoric acid compound) adhered to the surface of the lithium-containing composite oxide represented by LiNi_{0.80}Co_{0.045}Al_{0.055}Mn_{0.10}O₂; and an amount of the phosphoric acid compound was 0.2 parts by mass relative to 100 parts by mass of the lithium-containing composite oxide.

### <Comparative Example 7>

A test cell was produced and evaluated in the same manner as in Example 13 except that, in the production of the positive electrode, Na₃PO₄ was not added.

Table 3 shows the battery capacity per unit volume and the capacity retention of the test cells of Examples 13 to 15 and Comparative Example 7. Table 3 also shows the conditions similarly to Table 1. The battery capacity per unit volume shown in Table 3 is a relative evaluation based on Example 13. A case where the battery capacity is larger than that of Example 13 by greater than or equal to 5% is shown as "Excellent", and a case where the battery capacity is comparable to that of Example 13 is shown as "Good". The capacity retention of each of Examples and Comparative Example shown in Table 3 is shown relative to the capacity retention of the test cell of Example 13 being 100.

**[Table 3]**

| | Lithium-containing composite oxide | | | | | Additive | | | Outer diameter of battery [mm] | Basis weight [g/m²] | Current collection with positive electrode | | Voltage [V] | Evaluation results | |
|---|---|---|---|---|---|---|---|---|---|---|---|---|---|---|---|
| | Composition [mol%] | | | | D50 [µm] | Type | Adding method | Content (/positive electrode active material) [parts by mass] | | | | | | | |
| | Ni | Co | Al | Mn | | | | | | | Aspect | Number of leads | | Battery capacity per unit volume | Capacity retention |
| Example 13 | 80 | 4.5 | 5.5 | 10 | 11 | Trisodium phosphate | Addition | 0.2 | 40 | 275 | Equival ent | 3 | 4.2 | Good | 100 |
| Example 14 | 80 | 4.5 | 5.5 | 10 | 11 | Trilithium phosphate | Addition | 0.2 | 40 | 275 | Equival ent | 3 | 4.2 | Good | 103 |
| Example 15 | 80 | 4.5 | 5.5 | 10 | 11 | Lithium-phosphoric acid compound | Adhesion | 0.2 | 40 | 275 | Equival ent | 3 | 4.2 | Good | 105 |
| Comparative Example 7 | 80 | 4.5 | 5.5 | 10 | 11 | None | - | - | 40 | 275 | Equival ent | 3 | 4.2 | Excellent | 85 |

### <Example 16>

A test cell was produced and evaluated in the same manner as in Example 1 except that: in the production of the positive electrode active material, the composition of the lithium-containing composite oxide was LiNi_{0.80}Co_{0.10}Mn_{0.10}O₂; in the production of the positive electrode, cutting was performed to a predetermined electrode size to be housed in an exterior with φ45 mm in outer diameter to obtain the positive electrode; and in the production of the test cell, as illustrated in FIG. 4, the positive electrode and the sealing assembly were connected via the positive electrode current-collecting member, the negative electrode and the exterior were connected via the negative electrode current-collecting member, and the electrode assembly was housed in the exterior with φ45 mm in outer diameter.

### <Example 17>

A test cell was produced and evaluated in the same manner as in Example 16 except that, in the production of the positive electrode, Li₃PO₄ was used instead of Na₃PO₄.

### <Example 18>

A test cell was produced and evaluated in the same manner as in Example 16 except that: in the production of the positive electrode active material, 1 L of water was added into 1500 g of the obtained positive electrode active material and washed with water, phosphoric acid (H₃PO₄) in which pH was regulated to 2 by using LiOH was added during the water washing, and the mixture was sucking-filtered and then dried to adhere the phosphorus compound to a surface of the positive electrode active material; and in the production of the positive electrode, Na₃PO₄ was not added. As a result by analysis with an ICP emission spectrometer and TEM-EDX, it was confirmed that: a phosphoric acid compound including lithium (lithium-phosphoric acid compound) adhered to the surface of the lithium-containing composite oxide represented by LiNi_{0.80}Co_{0.10}Mn_{0.10}O₂; and an amount of the phosphoric acid compound was 0.2 parts by mass relative to 100 parts by mass of the lithium-containing composite oxide.

### <Comparative Example 8>

A test cell was produced and evaluated in the same manner as in Example 16 except that, in the production of the positive electrode, Na₃PO₄ was not added.

Table 4 shows the battery capacity per unit volume and the capacity retention of the test cells of Examples 16 to 18 and Comparative Example 8. Table 4 also shows the conditions similarly to Table 1. The battery capacity per unit volume shown in Table 4 is a relative evaluation based on Example 16. A case where the battery capacity is larger than that of Example 16 by greater than or equal to 5% is shown as "Excellent", and a case where the battery capacity is comparable to that of Example 16 is shown as "Good". The capacity retention of each of Examples and Comparative Example shown in Table 4 is shown relative to the capacity retention of the test cell of Example 16 being 100.

**[Table 4]**

| | Lithium-containing composite oxide | | | | | Additive | | | Outer diameter of battery [mm] | Basis weight [g/m²] | Current collection with positive electrode | | Voltage [V] | Evaluation results | |
|---|---|---|---|---|---|---|---|---|---|---|---|---|---|---|---|
| | Composition [mol%] | | | | D50 [µm] | Type | Adding method | Content (/positive electrode active material) [parts by mass] | | | | | | | |
| | Ni | Co | Al | Mn | | | | | | | Aspect | Number of leads | | Battery capacity per unit volume | Capacity retention |
| Example 16 | 80 | 10 | 0 | 10 | 11 | Trisodium phosphate | Addition | 0.2 | 45 | 250 | Current-collecting member | - | 4.2 | Good | 100 |
| Example 17 | 80 | 10 | 0 | 10 | 11 | Trilithium phosphate | Addition | 0.2 | 45 | 250 | Current-collecting member | - | 4.2 | Good | 102 |
| Example 18 | 80 | 10 | 0 | 10 | 11 | Lithium-phosphoric acid compound | Adhesion | 0.2 | 45 | 250 | Current-collecting member | - | 4.2 | Good | 104 |
| Comparative Example 8 | 80 | 10 | 0 | 10 | 11 | None | - | - | 45 | 250 | Current-collecting member | - | 4.2 | Excellent | 85 |

### <Example 19>

A test cell was produced and evaluated in the same manner as in Example 1 except that: in the production of the positive electrode active material, the composition of the lithium-containing composite oxide was LiNi_{0.80}Mn_{0.20}O₂; in the production of the positive electrode, the positive electrode slurry was applied so that the basis weight was 325 g/m².

### <Example 20>

A test cell was produced and evaluated in the same manner as in Example 19 except that, in the production of the positive electrode, Li₃PO₄ was used instead of Na₃PO₄.

### <Example 21>

A test cell was produced and evaluated in the same manner as in Example 19 except that: in the production of the positive electrode active material, 1 L of water was added into 1500 g of the obtained positive electrode active material and washed with water, phosphoric acid (H₃PO₄) in which pH was regulated to 2 by using LiOH was added during the water washing, and the mixture was sucking-filtered and then dried to adhere the phosphorus compound to a surface of the positive electrode active material; and in the production of the positive electrode, Na₃PO₄ was not added. As a result by analysis with an ICP emission spectrometer and TEM-EDX, it was confirmed that: a phosphoric acid compound including lithium (lithium-phosphoric acid compound) adhered to the surface of the lithium-containing composite oxide represented by LiNi_{0.80}Mn_{0.20}O₂; and an amount of the phosphoric acid compound was 0.2 parts by mass relative to 100 parts by mass of the lithium-containing composite oxide.

### <Comparative Example 9>

A test cell was produced and evaluated in the same manner as in Example 19 except that, in the production of the positive electrode, Na₃PO₄ was not added.

Table 5 shows the battery capacity per unit volume and the capacity retention of the test cells of Examples 19 to 21 and Comparative Example 9. Table 5 also shows the conditions similarly to Table 1. The battery capacity per unit volume shown in Table 5 is a relative evaluation based on Example 19. A case where the battery capacity is larger than that of Example 19 by greater than or equal to 5% is shown as "Excellent", and a case where the battery capacity is comparable to that of Example 19 is shown as "Good". The capacity retention of each of Examples and Comparative Example shown in Table 5 is shown relative to the capacity retention of the test cell of Example 19 being 100.

**[Table 5]**

| | Lithium-containing composite oxide | | | | | Additive | | | Outer diameter of battery [mm] | Basis weight [g/m²] | Current collection with positive electrode | | Voltage [V] | Evaluation results | |
|---|---|---|---|---|---|---|---|---|---|---|---|---|---|---|---|
| | Composition [mol%] | | | | D50 [µm] | Type | Adding method | Content (/positive electrode active material) [parts by mass] | | | | | | | |
| | Ni | Co | Al | Mn | | | | | | | Aspect | Number of leads | | Battery capacity per unit volume | Capacity retention |
| Example 19 | 80 | 0 | 0 | 20 | 11 | Trisodium phosphate | Addition | 0.2 | 50 | 325 | One line | 6 | 4.2 | Good | 100 |
| Example 20 | 80 | 0 | 0 | 20 | 11 | Trilithium phosphate | Addition | 0.2 | 50 | 325 | One line | 6 | 4.2 | Good | 102 |
| Example 21 | 80 | 0 | 0 | 20 | 11 | Lithium-phosphoric acid compound | Adhesion | 0.2 | 50 | 325 | One line | 6 | 4.2 | Good | 105 |
| Comparative Example 9 | 80 | 0 | 0 | 20 | 11 | None | - | - | 50 | 325 | One line | 6 | 4.2 | Excellent | 82 |

### <Example 22>

A test cell was produced in the same manner as in Example 1 except that: in the production of the positive electrode active material, the composition of the lithium-containing composite oxide was LiNi_{0.80}Mn_{0.20}O₂ in the production of the positive electrode, the positive electrode slurry was applied so that the basis weight was 300 g/m². The evaluation was performed in the same manner as in Example 1 except that, in the evaluation of the battery capacity per unit volume and the evaluation of the capacity retention, the value of the highest reaching voltage was changed to 4.3 V.

### <Example 23>

A test cell was produced and evaluated in the same manner as in Example 22 except that, in the production of the positive electrode, Li₃PO₄ was used instead of Na₃PO₄.

### <Example 24>

A test cell was produced and evaluated in the same manner as in Example 22 except that: in the production of the positive electrode active material, 1 L of water was added into 1500 g of the obtained positive electrode active material and washed with water, phosphoric acid (H₃PO₄) in which pH was regulated to 2 by using LiOH was added during the water washing, and the mixture was sucking-filtered and then dried to adhere the phosphorus compound to a surface of the positive electrode active material; and in the production of the positive electrode, Na₃PO₄ was not added. As a result by analysis with an ICP emission spectrometer and TEM-EDX, it was confirmed that: a phosphoric acid compound including lithium (lithium-phosphoric acid compound) adhered to the surface of the lithium-containing composite oxide represented by LiNi_{0.80}Mn_{0.20}O₂; and an amount of the phosphoric acid compound was 0.2 parts by mass relative to 100 parts by mass of the lithium-containing composite oxide.

### <Comparative Example 10>

A test cell was produced and evaluated in the same manner as in Example 22 except that, in the production of the positive electrode, Na₃PO₄ was not added.

Table 6 shows the battery capacity per unit volume and the capacity retention of the test cells of Examples 22 to 24 and Comparative Example 10. Table 6 also shows the conditions similarly to Table 1. The battery capacity per unit volume shown in Table 6 is a relative evaluation based on Example 22. A case where the battery capacity is larger than that of Example 22 by greater than or equal to 5% is shown as "Excellent", and a case where the battery capacity is comparable to that of Example 22 is shown as "Good". The capacity retention of each of Examples and Comparative Example shown in Table 6 is shown relative to the capacity retention of the test cell of Example 22 being 100.

**[Table 6]**

| | Lithium-containing composite oxide | | | | | Additive | | | Outer diameter of battery [mm] | Basis weight [g/m²] | Current collection with positive electrode | | Voltage [V] | Evaluation results | |
|---|---|---|---|---|---|---|---|---|---|---|---|---|---|---|---|
| | Composition [mol%] | | | | D50 [µm] | Type | Adding method | Content (/positive electrode active material) [parts by mass] | | | | | | | |
| | Ni | Co | Al | Mn | | | | | | | Aspect | Number of leads | | Battery capacity per unit volume | Capacity retention |
| Example 22 | 80 | 0 | 0 | 20 | 11 | Trisodium phosphate | Addition | 0.2 | 50 | 300 | One line | 6 | 4.3 | Good | 100 |
| Example 23 | 80 | 0 | 0 | 20 | 11 | Trilithium phosphate | Addition | 0.2 | 50 | 300 | One line | 6 | 4.3 | Good | 106 |
| Example 24 | 80 | 0 | 0 | 20 | 11 | Lithium-phosphoric acid compound | Adhesion | 0.2 | 50 | 300 | One line | 6 | 4.3 | Good | 109 |
| Comparative Example 10 | 80 | 0 | 0 | 20 | 11 | None | - | - | 50 | 300 | One line | 6 | 4.3 | Excellent | 72 |

### <Example 25>

A test cell was produced and evaluated in the same manner as in Example 1 except that: in the production of the positive electrode active material, the composition of the lithium-containing composite oxide was LiNi_{0.70}Al_{0.05}Mn_{0.25}O₂; in the production of the positive electrode, the positive electrode slurry was applied so that the basis weight was 325 g/m², and cutting was performed to a predetermined electrode size to be housed in an exterior with φ30 mm in outer diameter to obtain the positive electrode; and in the production of the test cell, the number of the aluminum leads was changed to three, and the electrode assembly was housed in the exterior with φ30 mm in outer diameter.

### <Example 26>

A test cell was produced and evaluated in the same manner as in Example 25 except that, in the production of the positive electrode, Li₃PO₄ was used instead of Na₃PO₄.

### <Example 27>

A test cell was produced and evaluated in the same manner as in Example 25 except that, in the production of the positive electrode, dilithium hydrogen phosphate (lithium hydrogen phosphite) (chemical formula: HLi₂PO₄) was used instead of Na₃PO₄.

### <Example 28>

A test cell was produced and evaluated in the same manner as in Example 25 except that, in the production of the positive electrode, lithium dihydrogen phosphate (chemical formula: H₂LiPO₄) was used instead of Na₃PO₄.

### <Example 29>

A test cell was produced and evaluated in the same manner as in Example 25 except that: in the production of the positive electrode active material, 1 L of water was added into 1500 g of the obtained positive electrode active material and washed with water, phosphoric acid (H₃PO₄) in which pH was regulated to 2 by using LiOH was added during the water washing, and the mixture was sucking-filtered and then dried to adhere the phosphorus compound to a surface of the positive electrode active material; and in the production of the positive electrode, Na₃PO₄ was not added. As a result by analysis with an ICP emission spectrometer and TEM-EDX, it was confirmed that: a phosphoric acid compound including lithium (lithium-phosphoric acid compound) adhered to the surface of the lithium-containing composite oxide represented by LiNi_{0.70}Al_{0.05}Mn_{0.25}O₂; and an amount of the phosphoric acid compound was 0.2 parts by mass relative to 100 parts by mass of the lithium-containing composite oxide.

### <Comparative Example 11>

A test cell was produced and evaluated in the same manner as in Example 25 except that, in the production of the positive electrode, Na₃PO₄ was not added.

Table 7 shows the battery capacity per unit volume and the capacity retention of the test cells of Examples 25 to 29 and Comparative Example 11. Table 7 also shows the conditions similarly to Table 1. The battery capacity per unit volume shown in Table 7 is a relative evaluation based on Example 25. A case where the battery capacity is larger than that of Example 25 by greater than or equal to 5% is shown as "Excellent", and a case where the battery capacity is comparable to that of Example 25 is shown as "Good". The capacity retention of each of Examples and Comparative Example shown in Table 7 is shown relative to the capacity retention of the test cell of Example 25 being 100.

**[Table 7]**

| | Lithium-containing composite oxide | | | | | Additive | | | Outer diameter of battery [mm] | Basis weight [g/m²] | Current collection with positive electrode | | Voltage [V] | Evaluation results | |
|---|---|---|---|---|---|---|---|---|---|---|---|---|---|---|---|
| | Composition [mol%] | | | | D50 [µm] | Type | Adding method | Content (/positive electrode active material) [parts by mass] | | | | | | | |
| | Ni | Co | Al | Mn | | | | | | | Aspect | Number of leads | | Battery capacity per unit volume | Capacity retention |
| Example 25 | 70 | 0 | 5 | 25 | 11 | Trisodium phosphate | Addition | 0.2 | 30 | 325 | One line | 3 | 4.2 | Good | 100 |
| Example 26 | 70 | 0 | 5 | 25 | 11 | Trilithium phosphate | Addition | 0.2 | 30 | 325 | One line | 3 | 4.2 | Good | 105 |
| Example 27 | 70 | 0 | 5 | 25 | 11 | Dilithium hydrogen phosphate | Addition | 0.2 | 30 | 325 | One line | 3 | 4.2 | Good | 102 |
| Example 28 | 70 | 0 | 5 | 25 | 11 | Lithium dihydrogen phosphate | Addition | 0.2 | 30 | 325 | One line | 3 | 4.2 | Good | 101 |
| Example 29 | 70 | 0 | 5 | 25 | 11 | Lithium-phosphoric acid compound | Adhesion | 0.2 | 30 | 325 | One line | 3 | 4.2 | Good | 107 |
| Comparative Example 11 | 70 | 0 | 5 | 25 | 11 | None | - | - | 30 | 325 | One line | 3 | 4.2 | Excellent | 80 |

### <Example 30>

A test cell was produced and evaluated in the same manner as in Example 1 except that, in the production of the positive electrode active material, two types of the lithium-containing composite oxide having a composition of LiNi_{0.90}Co_{0.05}Mn_{0.05}O₂ and median diameters (D50) on a volumetric basis of 3 µm and 18 µm were produced, and these were mixed at a mass ratio of 50:50 to obtain the positive electrode active material.

### <Example 31>

A test cell was produced and evaluated in the same manner as in Example 30 except that, in the production of the positive electrode, Li₃PO₄ was used instead of Na₃PO₄.

### <Example 32>

A test cell was produced and evaluated in the same manner as in Example 30 except that: in the production of the positive electrode active material, 1 L of water was added into 1500 g of the obtained positive electrode active material and washed with water, phosphoric acid (H₃PO₄) in which pH was regulated to 2 by using LiOH was added during the water washing, and the mixture was sucking-filtered and then dried to adhere the phosphorus compound to a surface of the positive electrode active material; and in the production of the positive electrode, Na₃PO₄ was not added. As a result by analysis with an ICP emission spectrometer and TEM-EDX, it was confirmed that: a phosphoric acid compound including lithium (lithium-phosphoric acid compound) adhered to the surface of the lithium-containing composite oxide represented by LiNi_{0.90}Co_{0.05}Mn_{0.05}O₂; and an amount of the phosphoric acid compound was 0.2 parts by mass relative to 100 parts by mass of the lithium-containing composite oxide.

### <Comparative Example 12>

A test cell was produced and evaluated in the same manner as in Example 19 except that, in the production of the positive electrode, Na₃PO₄ was not added.

Table 8 shows the battery capacity per unit volume and the capacity retention of the test cells of Examples 30 to 32 and Comparative Example 12. Table 8 also shows the conditions similarly to Table 1. The battery capacity per unit volume shown in Table 8 is a relative evaluation based on Example 30. A case where the battery capacity is larger than that of Example 30 by greater than or equal to 5% is shown as "Excellent", and a case where the battery capacity is comparable to that of Example 30 is shown as "Good". The capacity retention of each of Examples and Comparative Example shown in Table 8 is shown relative to the capacity retention of the test cell of Example 30 being 100.

**[Table 8]**

| | Lithium-containing composite oxide | | | | | Additive | | | Outer diameter of battery [mm] | Basis weight [g/m²] | Current collection with positive electrode | | Voltage [V] | Evaluation results | |
|---|---|---|---|---|---|---|---|---|---|---|---|---|---|---|---|
| | Composition [mol%] | | | | D50 [µm] | Type | Adding method | Content (/positive electrode active material) [parts by mass] | | | | | | | |
| | Ni | Co | Al | Mn | | | | | | | Aspect | Number of leads | | Battery capacity per unit volume | Capacity retention |
| Example 30 | 90 | 5 | 0 | 5 | 3 (50%) 18 (50%) | Trisodium phosphate | Addition | 0.2 | 50 | 250 | One line | 6 | 4.2 | Good | 100 |
| Example 31 | 90 | 5 | 0 | 5 | 3 (50%) 18 (50%) | Trilithium phosphate | Addition | 0.2 | 50 | 250 | One line | 6 | 4.2 | Good | 103 |
| Example 32 | 90 | 5 | 0 | 5 | 3 (50%) 18 (50%) | Lithium-phosphoric acid compound | Adhesion | 0.2 | 50 | 250 | One line | 6 | 4.2 | Good | 104 |
| Comparative Example 12 | 90 | 5 | 0 | 5 | 3 (50%) 18 (50%) | None | - | - | 50 | 250 | One line | 6 | 4.2 | Excellent | 87 |

In all of Table 1 to Table 8, Examples have improved cycle characteristics with increasing the battery capacity per unit volume compared with Comparative Examples.

### REFERENCE SIGNS LIST

10 secondary battery, 11 positive electrode, 12 negative electrode, 13 separator, 14 electrode assembly, 15 exterior, 16 sealing assembly, 17, 18 insulating plate, 19 positive electrode lead, 20 negative electrode lead, 21 grooved portion, 22 filter, 23 lower vent member, 24 insulating member, 25 upper vent member, 26 cap, 26a opening, 27 gasket, 30 positive electrode current collector, 32 positive electrode mixture layer, 34 positive electrode exposed portion, 40 negative electrode current collector, 42 negative electrode mixture layer, 44 negative electrode exposed portion, 50 positive electrode current collecting member, 52 negative electrode current collecting member

## Claims

1. A non-aqueous electrolyte secondary battery, comprising:
an electrode assembly in which a band-shaped positive electrode and a band-shaped negative electrode are wound with a separator interposed therebetween;
a bottomed cylindrical exterior with greater than or equal to 25 mm in outer diameter that houses the electrode assembly and that is connected to the negative electrode; and
a sealing assembly that seals an opening of an upper end of the exterior and that is connected to the positive electrode, wherein
the positive electrode has a positive electrode current collector and a positive electrode mixture layer formed on a surface of the positive electrode current collector,
the positive electrode mixture layer contains a positive electrode active material and a phosphorus compound,
the positive electrode active material includes a lithium-containing composite oxide having a layered rock-salt structure,
a basis weight of the positive electrode mixture layer is greater than or equal to 250 g/m², and
in the electrode assembly, greater than or equal to three positive electrode leads are drawn out.

2. The non-aqueous electrolyte secondary battery according to claim 1, wherein the positive electrode leads are arranged on an upper surface of the electrode assembly in substantially one line in a radial direction.

3. The non-aqueous electrolyte secondary battery according to claim 1, wherein the positive electrode leads are arranged on an upper surface of the electrode assembly with substantially same angles.

4. The non-aqueous electrolyte secondary battery according to any one of claims 1 to 3, wherein
the positive electrode has a plurality of positive electrode current collector exposed portions where the positive electrode current collector is exposed on an upper end along a longitudinal direction,
the positive electrode mixture layer is present between the positive electrode current collector exposed portions, and
one of the positive electrode leads is connected to each of the positive electrode current collector exposed portions.

5. A non-aqueous electrolyte secondary battery, comprising:
an electrode assembly in which a band-shaped positive electrode and a band-shaped negative electrode are wound with a separator interposed therebetween;
a bottomed cylindrical exterior with greater than or equal to 25 mm in outer diameter that houses the electrode assembly and that is connected to the negative electrode; and
a sealing assembly that seals an opening of an upper end of the exterior and that is connected to the positive electrode, wherein
the positive electrode has a positive electrode current collector and a positive electrode mixture layer formed on a surface of the positive electrode current collector,
the positive electrode mixture layer contains a positive electrode active material and a phosphorus compound,
the positive electrode active material includes a lithium-containing composite oxide having a layered rock-salt structure,
a basis weight of the positive electrode mixture layer is greater than or equal to 250 g/m², and
in the electrode assembly, the positive electrode protruding above the negative electrode and the separator is connected to a positive electrode current-collecting member, and the positive electrode current-collecting member and the sealing assembly are connected with a positive electrode lead.

6. The non-aqueous electrolyte secondary battery according to any one of claims 1 to 5, wherein
the lithium-containing composite oxide includes secondary particles formed by aggregation of primary particles, and
the phosphorus compound adheres to surfaces of the secondary particles.

7. The non-aqueous electrolyte secondary battery according to any one of claims 1 to 6, wherein a content of the phosphorus compound in the positive electrode mixture layer is greater than or equal to 0.05 parts by mass and less than or equal to 1 part by mass relative to 100 parts by mass of an amount of the positive electrode active material contained in the positive electrode mixture layer.

8. The non-aqueous electrolyte secondary battery according to any one of claims 1 to 7, wherein the phosphorus compound is at least one compound selected from the group consisting of trilithium phosphate, lithium hydrogen phosphate (Li₃₋ₓHₓPO₄ (0≤x<3)), trisodium phosphate, tripotassium phosphate, calcium phosphate, magnesium phosphate, and aluminum phosphate.

9. The non-aqueous electrolyte secondary battery according to claim 8, wherein the phosphorus compound is trilithium phosphate or lithium hydrogen phosphate (Li₃₋ₓHₓPO₄ (0≤x<3)).

10. The non-aqueous electrolyte secondary battery according to any one of claims 1 to 9, wherein the positive electrode active material is a mixture of: particles having a median diameter on a volumetric basis of greater than or equal to 14 µm; and particles having a median diameter on a volumetric basis of less than or equal to 6 µm.
